# EUROPÄISCHE PATENTANMELDUNG

(11) **EP 0 582 340 A1**
(43) Veröffentlichungstag der Anmeldung: **09.02.1994**
(21) Anmeldenummer: 93202229.6
(22) Anmeldetag: 28.07.1993
(51) Int. Cl.: G10L 5/06, G10L 7/08, G10L 9/06

(54) **Einrichtung zur Spracherkennung**

(30) Priorität: 01.08.1992 DE 4225475
(71) Anmelder: Philips Patentverwaltung GmbH, 22335 Hamburg (DE); Philips Electronics N.V., 5621 BA Eindhoven (NL)
(72) Erfinder: Rühl, Hans-Wilhelm, Dr.-Ing., D-20097 Hamburg (DE)
(74) Vertreter: Volmer, Georg, Dipl.-Ing.

(57) **Zusammenfassung**

Die Erfindung betrifft eine Einrichtung zur Spracherkennung von Ziffern und/oder Buchstaben mit einer Spracheingabeeinheit zur Eingabe von Ziffern und/oder Buchstaben, sowie von Steuerworten. Die Einrichtung soll eine insbesondere aus ergonomischer Sicht bessere Korrektur von Erkennungs- bzw. Eingabefehlern ermöglichen.

Es wird eine Einrichtung (1, 2, 3) zur Spracherkennung mit einer Spracheingabeeinheit (1) zur Eingabe von Ziffern, Buchstaben und/oder Steuerworten (Z, G, L) vorgeschlagen, mit einer Spracherkennungseinrichtung (2) zur Detektion der eingebbaren Ziffern und/oder Buchstaben, Pausen (P) und Steuerwörter (Z, G, L), mit einer Speichereinheit (7) zur Speicherung der von der Spracherkennungseinheit (2) detektierten Ziffern und/oder Buchstaben und mit einer Ausgabeeinheit (3) zur Ausgabe der von der Spracherkennungseinrichtung (2) detektierten Ziffern und/oder Buchstaben. Die Spracherkennungseinrichtung (2) weist eine Steuereinrichtung (6) auf, die vorgesehen ist, nach Eingabe mindestens einer aus Ziffern und/oder Buchstaben sowie einer Pause (P) zusammengesetzten Ziffern- bzw. Buchstabengruppe (31, 32, 33) durch ein erstes Steuerwort (Z) jeweils die zuletzt detektierte Ziffer und/oder den zuletzt detektierten Buchstaben zu löschen oder zu korrigieren, nach Eingabe eines zweiten Steuerwortes (G) die jeweils zuletzt detektierte Ziffern- bzw. Buchstabengruppe (31, 32, 33) zu löschen und/oder nach Eingabe eines dritten Steuerwortes (L) die gesamten detektierten Ziffern und Ziffer- bzw. Buchstabengruppen (31, 32, 33) zu löschen.

## Beschreibung

Die Erfindung betrifft eine Einrichtung zur Spracherkennung von Ziffern und/oder Buchstaben mit einer Spracheingabeeinheit zur Eingabe von Ziffern und/oder Buchstaben, sowie von Steuerworten.

Eine derartige Einrichtung wird beispielsweise bei einem Mobilfunktelefon zur Eigabe von Telefonnummern benötigt. Ein derartiges Mobiltelefon weist eine Freisprecheinrichtung mit einem Mikrofon auf, die es dem Benutzer ermöglicht durch Spracheingabe Ziffern von Telefonnummern abzuspeichern bzw. eine gewünschte Telefonverbindung ohne eine bei der Fahrzeugführung störende Betätigung von Tasten aufzubauen. Der Benutzer eines derartigen Mobilfunktelefons hat dadurch die Möglichkeit, auch bei schwierigen Fahrsituationen, die die ganze Aufmerksamkeit des Fahrers erfordern, ein Telefongespräch in die Wege zu leiten. Hierzu muß er lediglich das Mobilfunktelefon beispielsweise mittels eines Steuerwortes aktivieren und anschließend durch Spracheingabe der Ziffern der gewünschten Telefonnummer die gewünschte Verbindung einleiten. Das Mobilfunktelefon weist hierzu neben einer Spracheingabeeinheit zur Eingabe der Ziffern, Buchstaben oder Steuerworte eine Spracherkennungseinrichtung auf. Diese gibt die detektierten Ziffern und/oder Buchstaben visuell oder akustisch zur Kontrolle wieder, da ein wesentliches Problem beim Einsatz einer derartigen Spracherkennungseinrichtung darin besteht, daß die Erkennungsverfahren fehlerbehaftet sind, d.h. daß statt der gesprochenen Äußerung eine andere, falsche Äußerung erkannt wird.

Aus WO 89/04035 ist eine Einrichtung zur Spracherkennung bekannt, bei der eine Anzahl von Ziffern, beispielsweise eine Telefonnummer in Form einzelner Ziffernsequenzen eingegeben werden, die jeweils durch eine Pause voneinander getrennt sind. Durch das Vorsehen von Pausen wird ermöglicht, daß der Benutzer bei einer fehlerhaften Spracherkennung die jeweils zuletzt eingegebenen Sequenz von Ziffern ändern kann und nicht die gesamte Ziffernfolge von neuem durch die Spracheingabeeinheit eingegeben zu werden braucht.

Der Erfindung liegt die Aufgabe zugrunde, eine Einrichtung zur Spracherkennung anzugeben, die eine insbesondere aus ergonomischer Sicht bessere Korrektur von Erkennungs- bzw. Eingabefehlern ermöglicht.

Diese Aufgabe wird durch eine Einrichtung zur Spracherkennung gelöst mit einer Spracheingabeeinheit zur Eingabe von Ziffern, Buchstaben und/oder Steuerworten, mit einer Spacherkennungseinrichtung zur Detektion der eingebbaren Ziffern und/oder Buchstaben, Pausen und Steuerwörter, mit einer Speichereinheit zur Speicherung der von der Spracherkennungseinheit detektierten Ziffern und/oder Buchstaben und mit einer Ausgabeeinheit zur Ausgabe der von der Spracherkennungseinrichtung detektierten Ziffern und/oder Buchstaben, wobei die Spracherkennungseinrichtung eine Steuereinrichtung aufweist, die vorgesehen ist, nach Eingabe mindestens einer aus Ziffern und/oder Buchstaben sowie einer Pause zusammengesetzten Ziffern- bzw Buchstabengruppe durch ein erstes Steuerwort jeweils die zuletzt detektierte Ziffer und/oder den zuletzt detektierten Buchstaben zu löschen oder zu korrigieren, nach Eingabe eines zweiten Steuerwortes die jeweils zuletzt detektierte Zifferngruppe zu löschen und/oder nach Eingabe eines dritten Steuerwortes die gesamten detektierten Ziffern und Ziffergruppen zu löschen.

Die Erfindung geht dabei von der Erkenntnis aus, daß die Korrekturmöglichkeit der bisherigen gesamten Eingabe und auch die Korrektur von einzelnen Sequenzen, z. B. Wort- oder Zifferngruppen lediglich eine unzureichende Korrekturmöglichkeit darstellt, da in jeder Sprache häufig Verwechslungen insbesondere einzelner Ziffern vorkommen. So wird bei den Ziffern im Deutschen häufig "0" mit "9" und "2" mit "3" und umgekehrt verwechselt, während im Englischen oftmals "5" mit "9" verwechselt werden kann. Durch die angegebene Einrichtung ist es zur Korrektur einer derartigen Falscheingabe nicht mehr erforderlich, die gesamte Eingabe zu löschen oder zumindest die gesamte letzte Sequenz, sondern es kann lediglich die zuletzt eingegebene Ziffer gelöscht werden. Dabei wird die Position der zu korrigierenden Ziffer bzw. des zu korrigierenden Buchstabens implizit angegeben und eine aus ergonomischer Sicht mühselige Spezifizierung der Position der zu korrigierenden Ziffer bzw. des zu korrigierenden Buchstabens entfällt. Dies ermöglicht eine zeitsparende und ergonomische Korrektur von fehlerhaften Eingaben. Die Einrichtung erhält somit folgende Kontroll- bzw. Korrekturmöglichkeiten: Korrektur der letzten Eingabe mit Hilfe des ersten Steuerwortes, Löschen einer Wortgruppe mit Hilfe des zweiten Steuerwortes sowie Löschen der gesamten Eingabe mit Hilfe des dritten Steuerwortes.

Eine visuelle Kontrollmöglichkeit für den Sprecher ergibt sich dadurch, daß die Ausgabeeinheit eine Anzeigevorrichtung ist. Eine derartige Anzeigevorrichtung ist beispielsweise in den Fällen sinnvoll, in denen der Sprecher durch die optische Anzeigevorrichtung nicht abgelenkt wird.

Eine akustische Kontrollmöglichkeit für den Sprecher ergibt sich dadurch, daß die Ausgabeeinheit eine mit einem Lautsprecher verbundene Spracherzeugungseinheit ist.

Die Eingabe der Ziffern, Buchstaben oder Steuerworte kann auf einfache Weise dadurch erfolgen, daß die Spracheingabeeinheit mit einem Bedienhörer und/oder einer Freisprecheinrichtung gekoppelt ist.

Im folgenden wird die Erfindung anhand der in den Figuren dargestellten Ausführungsbeispiele näher erläutert.

Es zeigen:
Fig. 1 ein Ausführungsbeispiel einer Einrichtung zur Spracherkennung,
Fig. 2 ein weiteres Ausführungsbeispiel einer Einrichtung zur Spracherkennung,
Fig. 3 ein Flußablaufdiagramm für ein Verfahren zur Spracherkennung und
die Fig. 4a und 4b ein Beispiel für eine Eingabe und Korrektur einer Telefonnummer.

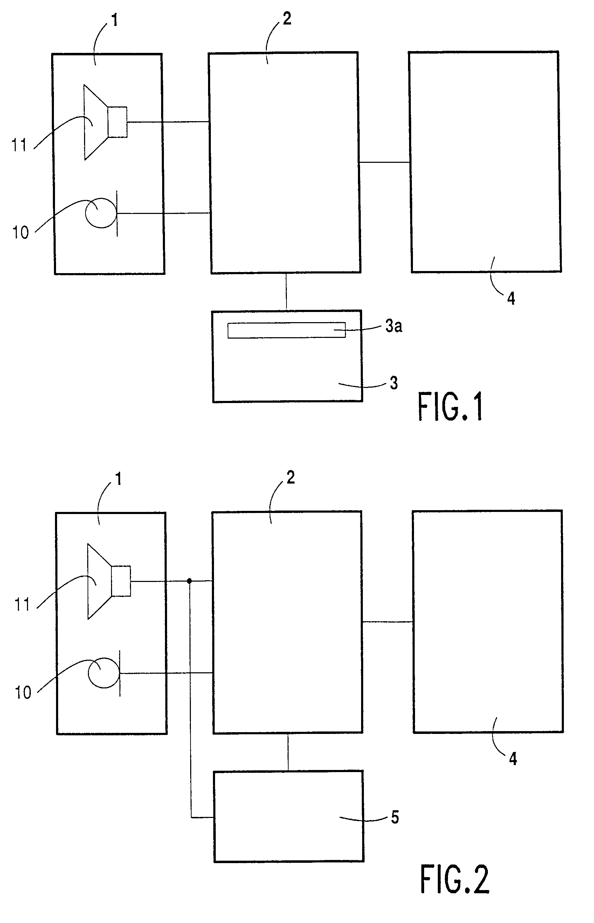

Die in Fig. 1 dargestellte Einrichtung 1, 2, 3 zur Spracherkennung ist Teil eines Mobilfunktelefons 1, 2, 3, 4, von dem lediglich die für die Spracherkennungseinrichtung 1, 2, 3 erforderlichen Teile dargestellt sind. Das Mobilfunktelefon 1, 2, 3, 4 weist eine Spracheingabeeinheit 1, eine Spracherkennungseinheit 2, sowie eine als Anzeigevorrichtung ausgebildete Ausgabeeinheit 3 mit einem Anzeigefeld 3a auf. Mit dem Bezugszeichen 4 sind die übrigen, für die Funktion der Spracherkennungseinrichtung nicht weiter relevanten Teile des Mobilfunktelefons gekennzeichnet. Die Spracheingabeeinheit weist einen Lautsprecher 11 sowie ein Mikrofon 10 auf.

Im folgenden wird die Funktion der Spracherkennungseinrichtung 1, 2, 3 näher erläutert. Ein Sprecher, beispielsweise der Fahrer eines Kraftfahrzeugs gibt mit Hilfe des Mikrofons 10, das beispielsweise Teil einer Freisprecheinrichtung ist, eine gewünschte Rufnummer ein. Die Eingabe erfolgt dabei durch Sprechen der einzelnen Ziffern der Telefonnummer, wobei die Spracherkennungseinheit die detektierten Ziffern auf der Anzeigevorrichtung 3 anzeigt. Telefonnummer, die aus einer Vorwahlnummer und einer Teilnehmernummer bestehen, werden dabei durch eine erste Zifferngruppe für die Vorwahlnummer und durch eine durch Pause abgetrennte zweite Zifferngruppe für die Teilnehmernummer eingegeben und auf der Anzeigevorrichtung 3, 3a entsprechend angezeigt. Die in Fig. 1 dargestellte Spracherkennungseinrichtung 1, 2, 3 ermöglicht es dem Sprecher 3 folgende verschiedenen Korrekturmöglichkeiten anzuwenden:
1. Wenn der Sprecher beispielsweise die Orientierung verloren hat, hat er die Möglichkeit, mit Hilfe eines dritten Stuerwortes die gesamte Eingabe, d. h. die gesamten von der Spracherkennungseinrichtung 2 dedektierten Ziffern und Ziffergruppen zu löschen.
2. Treten Fehler in nicht - letzter Position einer Zifferngruppe auf, kann der Sprecher ein zweites Steuerwort zum löschen der letzten Zifferngruppe einsetzen, um anschließend die Zifferngruppe als ganzes oder in kleineren Zifferngruppen aufgeteilt zu wiederholen.
3. Treten erwartet oder unerwartet Falscherkennungen der letzten gesprochenen Ziffer auf, so kann der Sprecher ein erstes Steuerwort einsetzen, mit dem ein Korrekturverfahren zur Änderung oder zur neuen Eingabe der letzten Ziffer aktiviert wird. Bei der dritten Möglichkeit, d. h. der Eingabe des ersten Steuerwortes wird die Angabe der Position der zu korrigierenden Ziffer der Einrichtung 1, 2, 3 zur Spracherkennung implizit angegeben. Es entfällt der unergonomische Aufwand zur Spezifizierung einer Position der zu korrigierenden Ziffer. Somit kann gezielt die richtige Erkennung einer einzelnen Ziffer durch ein Korrekturverfahren erzwungen werden. Ein derartiges Korrekturverfahren, das mit hoher Wahrscheinlichkeit zu einer Korrektur der Erkennung führt, ist z. b. in dem Aufsatz "SPREIN-ein Dialogsystem mit Spracherkennung über Telefon", PKI technische Mitteilungen 1/1988 Seiten 23 - 28 enthalten.

Fig. 2 zeigt ein weiteres Ausführungsbeispiel einer Einrichtung zur Spracherkennung. Dabei wurden die bereits im Zusammenhang mit Fig. 1 eingeführten Bezugszeichen verwendet, so daß auch auf die Beschreibung zur Fig. 1 verwiesen werden kann. Als Unterschied zu dem in Fig. 1 dargestellten Ausführungsbeispiel erfolgt die Ausgabe der detektierten Ziffern bzw. Buchstaben mit Hilfe einer Spracherzeugungseinheit 5, die an den Lautsprecher 11 der Spracheingabeeinheit 1 angeschlossen ist. Eine derartige Ausführung ist beispielsweise bei einem in einem Kraftfahrzeug angeordneten Mobilfunktelefon sinnvoll, da der Benutzer eines derartigen Mobilfunktelefons dadurch die Möglichkeit hat, auch bei schwierigen Fahrsituationen, die die ganze Aufmerksamkeit des Fahrers erfordern, eine gewünschte Telefonnummer zur Einleitung eines Telefongesprächs einzugeben.

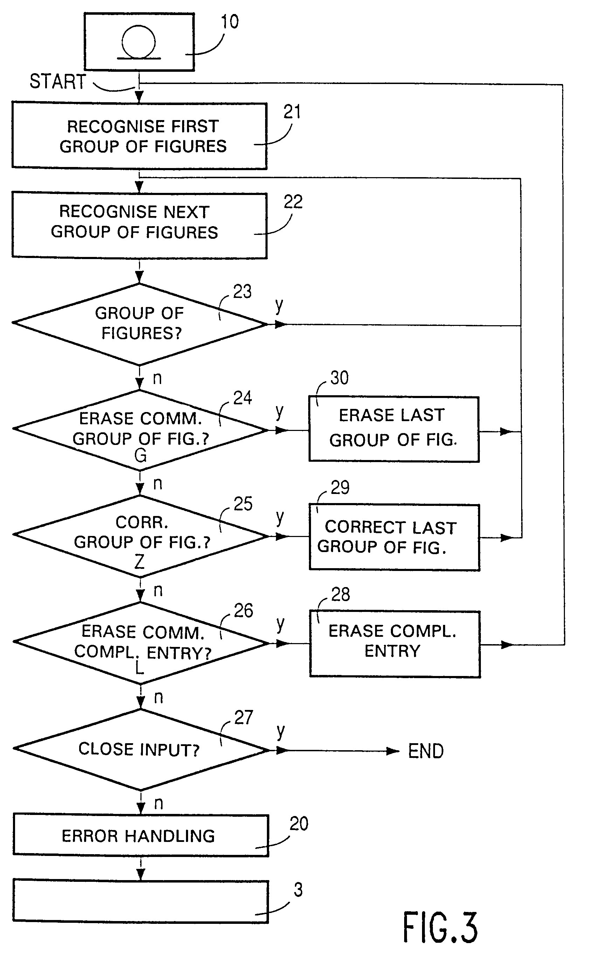

Fig. 3 zeigt eine Flußablaufdiagramm für ein Verfahren zur Spracherkennung, das von der in den Figuren 1 und 2 dargestellten Spracherkennungseinrichtung 2 durchlaufen wird. Durch die Angabe des bereits im Zusammenhang mit Fig. 1 eingeführten Mikrofons 10 am Beginn des Flußablaufdiagramms und durch die weitere Angabe der Ausgabeeinheit 3 am Ende des Flußablaufdiagramms wird der Zusammenhang mit dem in Fig. 1, 2 dargestellten Ausführungsbeispiel unterstrichen. Im folgenden soll der Ablauf eines Verfahrens zur Spracherkennung anhand des Flußablaufdiagramms näher erläutert werden. Ein Sprecher gibt mit Hilfe des Mikrofons 10 beispielsweise eine Telefonnummer ein. In einem Block 21 erfolgt zunächst die Erkennung einer ersten aus Ziffern sowie einer Pause zusammengesetzten Zifferngruppe. Im Block 22 erfolgt die Erkennung der nächsten Äußerung, die aus einer weiteren Zifferngruppe, einem Löschbefehl G für die Zifferngruppe, einem Korrekturbefehl Z für die letzte Ziffer oder einem Löschbefehl L für die gesamte Eingabe bestehen kann. Somit erfolgt in der Abfrage 23 die Abfrage nach einer Zifferngruppe, in der Abfrage 24 die Abfrage nach dem Löschbefehl G für die Zifferngruppe, in der Abfrage 25 die Abfrage nach dem Korrekturbefehl (Z) für die letzte Ziffer und in der Abfrage 26 die Abfrage nach dem Löschbefehl L für die gesamte Eingabe. Die Abfragen 23, 24, 25, 26 können negativ n oder positiv y beantwortet werden. Bei jeweils negativer Beantwortung erfolgt jeweils die Folgen der Abfrage. Bei positiver Beantwortung der Abfragung 23 erfolgt ein Rücksprung auf den Block 22, d. h. die Erkennung der nächsten Äußerung. Bei positiver Abfrage 24 wird die letzte Zifferngruppe gelöscht, anschließend erfolgt ein Rücksprung auf den Block 22. Bei positiver Abfrage 25 wird im Block 29 die letzte Ziffer gelöscht bzw. korrigiert, anschliepend erfolgt eine Rücksprung zu Block 23. Bei positiver Antwort auf die Abfrage 26 erfolgt im Block 28 ein Löschen der gesamten bisherigen Eingabe und anschließend ein Rücksprung an den Start. Bei negativem Ergebnis der Abfrage 26 wird in der Abfrage 27 ein Abschließen der Eingabe abgefragt. Bei positiver Antwort ist die Eingabe abgeschlossen. Bei negativem Ergebnis der Abfrage 27 erfolgt im Block 20 ggf. eine Fehlerbehandlung.

Durch das in Fig. 3 angegebenene Verfahren zur Spracherkennung wird somit die Korrektur einer beliebigen Ziffer aus einer zusammenhängend gesprochenen Folge von Ziffern möglich, ohne daß die zu korrigierende Ziffer beispielsweise durch Angabe ihrer Position genauer zu spezifizieren ist. Durch die Korrekturmöglichkeit der jeweils zuletzt gesprochenen bzw. angezeigten Ziffer ergibt sich eine ergonomische Korrekturmöglichkeit. Für bestimmte Anwendungsfälle ist es auch denkbar, daß lediglich die Abfragen 25 und 26 oder beispielsweise die Abfragen 24 und 25 gemeinsam zum Einsatz kommen.

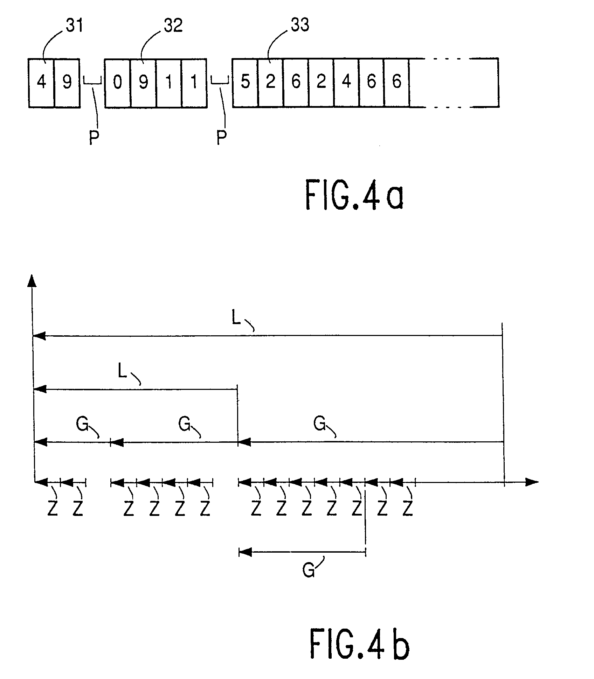

Die Fig. 4a, 4b zeigen die Möglichkeiten eines in Fig. 3 angegebenen Spracherkennungsverfahrens anhand einer beispielhaften Eingabe einer Telefonnummer, die aus einer Landeskennzahl 31, einer Ortsnetzkennzahl 32 und einer Teilnehmernummer 30 besteht. In der Regel wird der Sprecher bei der Eingabe einer derartigen Telefonnummer die Eingabe mit Hilfe von drei Zifferngruppen 31, 32, 33 vornehmen, die jeweils durch eine Pause P voneinander getrennt sind. In Fig. 4b ist dargestellt, welche Korrekturmöglichkeiten der Sprecher beim Eingeben der in Fig. 4a angegebenen Telefonnummer hat. Durch ein erstes Steuerwort Z hat der Sprecher jeweils die Möglichkeit, eine zuletzt eingegebene Ziffer zu löschen bzw. einem Korrekturverfahren zuzuführen. Nach Abschluß der Eingabe einer Zifferngruppe 31, 32, 33 hat der Sprecher weiter die Möglichkeit, durch Eingabe eines zweiten Steuerwortes (G) der jeweils zuletzt eingegebene Zifferngruppe 31, 32, 33 zu löschen. Die dritte Möglichkeit besteht für den Sprecher darin, die gesamte Eingabe mit Hilfe eines dritten Steuerwortes L zu löschen. Durch die angegebenen Pfeilrichtungen bei der Angabe der Steuerworte Z, G, L soll dies in Fig. 4b veranschaulicht werden.

## Patentansprüche

1. Einrichtung (1, 2, 3) zur Spracherkennung mit einer Spracheingabeeinheit (1) zur Eingabe von Ziffern, Buchstaben und/oder Steuerworten (Z, G, L), mit einer Spracherkennungseinrichtung (2) zur Detektion der eingebbaren Ziffern und/oder Buchstaben, Pausen (P) und Steuerwörter (Z, G, L), mit einer Speichereinheit (7) zur Speicherung der von der Spracherkennungseinheit (2) detektierten Ziffern und/oder Buchstaben und mit einer Ausgabeeeinheit (3) zur Ausgabe der von der Spracherkennungseinrichtung (2) detektierten Ziffern und/oder Buchstaben,
dadurch gekennzeichnet,
daß die Spracherkennungseinrichtung (2) eine Steuereinrichtung (6) aufweist, die vorgesehen ist, nach Eingabe mindestens einer aus Ziffern und/oder Buchstaben sowie einer Pause (P) zusammengesetzten Ziffern- bzw. Buchstabengruppe (31, 32, 33) durch ein erstes Steuerwort (Z) jeweils die zuletzt detektierte Ziffer und/oder den zuletzt detektierten Buchstaben zu löschen oder zu korrigieren, nach Eingabe eines zweiten Steuerwortes (G) die jeweils zuletzt detektierte Ziffern- bzw. Buchstabengruppe (31, 32, 33) zu löschen und/oder nach Eingabe eines dritten Steuerwortes (L) die gesamten detektierten Ziffern und Ziffer- bzw. Buchstabengruppen (31, 32, 33) zu löschen.

2. Einrichtung nach Anspruch 1,
dadurch gekennzeichnet,
daß die Ausgabeeinheit (3) eine Anzeigevorrichtung ist.

3. Einrichtung nach einem der Ansprüche 1 oder 2,
dadurch gekennzeichnet,
daß die Ausgabeeinheit (3) eine mit einem Lautsprecher (11) verbundene Spracherzeugungseinheit (5) ist.

4. Endgerät (1, 2, 3) mit einer Spracheingabeeinheit (1) zur Eingabe von Ziffern, Buchstaben und/oder Steuerworten (Z, G, L), mit einer Spracherkennungseinrichtung (2) zur Detektion der eingebbaren Ziffern und/oder Buchstaben, Pausen (P) und Steuerwörter (Z, G, L), mit einer Speichereinheit (7) zur Speicherung der von der Spracherkennungseinheit (2) detektierten Ziffern und/oder Buchstaben und mit einer Ausgabeeinheit (3) zur Ausgabe der von der Spracherkennungseinrichtung (2) detektierten Ziffern und/oder Buchstaben,
dadurch gekennzeichnet,
daß die Spracherkennungseinrichtung (2) eine Steuereinrichtung (6) aufweist, die vorgesehen ist, nach Eingabe mindestens einer aus Ziffern und/oder Buchstaben sowie einer Pause (P) zusammengesetzten Ziffern bzw. Buchstabengruppe (31, 32, 33) durch ein erstes Steuerwort (Z) jeweils die zuletzt detektierte Ziffer und/oder den zuletzt detektierten Buchstaben zu löschen oder zu korrigieren, nach Eingabe eines zweiten Steuerwortes (G) die jeweils zuletzt detektierte Ziffern- bzw. Buchstabengruppe (31, 32, 33) zu löschen und/oder nach Eingabe eines dritten Steuerwortes (L) die gesamten detektierten Ziffern und Ziffer- bzw. Buchstabengruppen (31, 32, 33) zu löschen.

5. Endgerät nach Anspruch 4,
dadurch gekennzeichnet,
daß die Spracheingabeeinheit (1) mit einem Bedienhörer und/oder einer Freisprecheinrichtung gekoppelt ist.

6. Endgerät nach einem der Ansprüche 4 oder 5,
dadurch gekennzeichnet,
daß das Telefon (1, 2, 3, 4) ein Mobilfunktelefon mit einem Funksendeempfänger ist.

7. Endgerät nach einem der Ansprüche 4 oder 5,
dadurch gekennzeichnet,
daß die Ausgabeeinheit (3) eine Anzeigevorrichtung ist.

8. Endgerät nach einem der Ansprüche 4 bis 6,
dadurch gekennzeichnet,
daß die Ausgabeeinheit (3) eine mit einem Lausprecher (11) verbundene Spracherzeugungseinheit (5) ist.

9. Verfahren zur Spracherkennung von Ziffern, Buchstaben und/oder Steuerworten, wobei durch einen Sprecher mit Hilfe eines dritten Steuerwortes (L) die gesamte Eingabe, mit Hilfe eines zweiten Steuerwortes (G) eine aus Ziffern und/oder Buchstaben sowie einer Pause (P) zusammengesetzten Ziffern- bzw. Buchstabengruppe (31, 32, 33) löschbar ist,
dadurch gekennzeichnet,
daß mit Hilfe eines ersten Steuerwortes (Z) die zuletzt eingegebene Ziffer und/oder der zuletzt eingegebene Buchstabe lösch- bzw. korrigierbar ist.
